# EUROPEAN PATENT APPLICATION

(11) **EP 2 016 826 A1**
(43) Date of publication of application: **21.01.2009**
(21) Application number: 08252017.2
(22) Date of filing: 11.06.2008
(51) Int. Cl.: A01N 25/32, A01N 47/22, A01N 33/12, A01N 27/00

(54) **Safening of pesticides with cyclopropenes**

(30) Priority: 19.06.2007 US 936266 P
(71) Applicant: Rohm and Haas Company, Philadelphia, PA 19106-2399 (US)
(72) Inventor: Basel, Richard, Fostoria, Ohio 44830 (US); Kostansek, Edward, Charles, Buckingham, Pennsylvania 18912 (US)
(74) Representative: Kent, Venetia Katherine

(57) **Abstract**

A method for reducing the detrimental effects of pesticides, fertilizers or a combination thereof on a plant. The method comprises treating a plant with a safener containing a cyclopropene derivative, and with pesticides fertilizers or a combination thereof.

## Description

Many pesticides, especially herbicides, can cause injury to crops as a side effect of their intended action. This is true even for GMO crops such as ROUNDUP READY^{™} soybeans. The result is slower or delayed growth and a less-healthy crop. It is well known that certain agents can be used to "safen" the action of some pesticides. In general, a safener is a substance added to a pesticide formulation to eliminate or reduce phytotoxic effects of the pesticide to certain crops. For example, WO 2005/044002 discloses the use of a variety of safeners to counteract the effects of strobilurin fungicides on legumes. However, a more general method of reducing phytotoxic effects of pesticides and/or fertilizers is needed.

### STATEMENT OF THE INVENTION

In the present invention, there is provided a method for reducing detrimental effects of pesticides, fertilizers or a combination thereof on a plant. The method comprises steps of:
(a) treating the plant with at least one cyclopropene of the formula 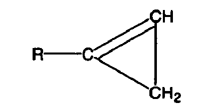 wherein said R is hydrogen or a substituted or unsubstituted alkyl, alkenyl, alkynyl, cycloalkylalkyl, phenyl, or naphthyl group; wherein the substituents, when present, are independently halogen, alkyl, alkoxy, or substituted or unsubstituted phenoxy; and
(b) treating the plant with pesticides, fertilizers or a combination thereof.

### DETAILED DESCRIPTION

As used herein, all percentages are percent by weight and all parts are parts by weight, unless otherwise specified. Percentages on the total weight of the composition are based on the actual composition contacting the plant. All ratios are by weight. As used herein, "pesticides" includes herbicides, insecticides, fungicides and antimicrobial agents.

As used herein, the term "alkyl" means straight chain, branched chain , or cyclic (C₁-C₂₀) saturated hydrocarbyl radicals. The terms "alkenyl" and "alkynyl" mean (C₂-C₂₀) alkenyl and (C₂-C₂₀) alkynyl groups. The term "cycloalkylalkyl" means a (C₁-C₁₅) alkyl group substituted with a (C₃-C₇) cycloalkyl group such as, for example cyclopropylmethyl, cyclopropylethyl, cyclobutylmethyl, and cyclopentylethyl. The term "haloalkyl" means an alkyl radical wherein one or more of the hydrogen atoms have been replaced by a halogen atom. The term "halogen" means one or more of fluorine, chlorine, bromine, and iodine.

The practice of the present invention involves the use of one or more cyclopropenes. As used herein, a "cyclopropene" is any compound with the formula 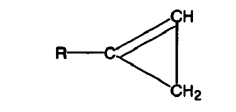 where R is as defined above. As used herein, when the compound of the above structure when R is a hydrogen is meant, the phrase "unsubstituted cyclopropene" will be used.

In some embodiments, R has no double bond. Independently, in some embodiments, R has no triple bond. Independently, in some embodiments, there is no halogen atom substituent on R. Independently, in some embodiments, R has no substituents that are ionic. Independently, in some embodiments, R is not capable of generating oxygen compounds.

In some embodiments of the invention, R is (C₁-C₁₀) alkyl. In some embodiments, R is (C₁-C₈) alkyl, or (C₁-C₄) alkyl, or methyl. When R is methyl, the cyclopropene is known herein as "1-MCP."

In some embodiments of the present invention, the cyclopropene is complexed with at least one molecular encapsulating agent. Useful molecular encapsulating agents include, for example, organic and inorganic molecular encapsulating agents. Suitable organic molecular encapsulating agents include, for example, substituted cyclodextrins, unsubstituted cyclodextrins, and crown ethers. Suitable inorganic molecular encapsulating agents include, for example, zeolites. Mixtures of suitable molecular encapsulating agents are also suitable. In some embodiments of the invention, the encapsulating agent is α-cyclodextrin ("α-CD"), β-cyclodextrin, γ-cyclodextrin, or a mixture thereof. In another embodiment of the invention, particularly when the cyclopropene is 1-methylcyclopropene, the encapsulating agent is α-cyclodextrin. The preferred encapsulating agent will vary depending upon the size of the R group. However, as one skilled in the art will appreciate, any cyclodextrin or mixture of cyclodextrins, cyclodextrin polymers, modified cyclodextrins, or mixtures thereof can also be utilized pursuant to the present invention. Cyclodextrins are available from Wacker Biochem Inc., Adrian, MI or Cerestar USA, Hammond, IN, as well as other vendors.

A cyclopropene or substituted cyclopropene molecule encapsulated in a molecule of a molecular encapsulating agent is known herein as a "cyclopropene molecular encapsulating agent complex." The cyclopropene molecular encapsulation agent complexes can be prepared by any means. In one method of preparation, for example, such complexes are prepared by contacting the cyclopropene with a solution or slurry of the molecular encapsulation agent and then isolating the complex, again using general processes disclosed in U. S. Patent No. 6,017,849. In the case of 1-MCP, the 1-MCP gas is bubbled through a solution of α-cyclodextrin in water, from which the complex first precipitates and is then isolated by filtration.

In some embodiments, the amount of molecular encapsulating agent can usefully be characterized by the ratio of moles of molecular encapsulating agent to moles of cyclopropene. In some embodiments, the ratio of moles of molecular encapsulating agent to moles of cyclopropene is 0.1 or larger; or 0.2 or larger; or 0.5 or larger; or 0.9 or larger. Independently, in some of such embodiments, the ratio of moles of molecular encapsulating agent to moles of cyclopropene is 2 or lower; or 1.5 or lower.

The amount of cyclopropene in compositions used in the present invention may vary widely, depending on the type of composition and the intended method of use. In some embodiments, the amount of cyclopropene, based on the total weight of the composition, is 4% by weight or less; or 1% by weight or less; or 0.5% by weight or less; or 0.05% by weight or less. Independently, in some embodiments, the amount of cyclopropene, based on the total weight of the composition, is 0.000001 % by weight or more; or 0.00001 % by weight or more; or 0.0001 % by weight or more; or 0.001 % by weight or more.

In compositions used in the present invention that include water, the amount of cyclopropene may be characterized as parts per million (i.e., parts by weight of cyclopropene per 1,000,000 parts by weight of water, "ppm") or as parts per billion (i.e., parts by weight of cyclopropene per 1,000,000,000 parts by weight of water, "ppb"). In some embodiments, the amount of cyclopropene is 1 ppb or more; or 10 ppb or more; or 100 ppb or more. Independently, in some embodiments, the amount of cyclopropene is 10,000 ppm or less; or 1,000 ppm or less.

The method of this invention can be used on any plant that is treated with pesticides and/or fertilizers, e.g., agronomic crops such as soybeans, corn, cotton, grains (wheat, rye, rice, etc.); horticultural crops such as fruits, including tomatoes, peppers, grapes, etc.; tree crops such as apples, pears, etc.; tropical crops such as mango, coffee, avocado, etc.; and ornamentals such as bedding flowers, evergreens, potted plants, etc.

In some embodiments, the practice of the present invention involves the use of one or more metal-complexing agents. A metal-complexing agent is a compound that contains one or more electron-donor atoms capable of forming coordinate bonds with a metal atoms. Some metal-complexing agents are chelating agents. As used herein, a "chelating agent" is a compound that contains two or more electron-donor atoms that are capable of forming coordinate bonds with a metal atom, and a single molecule of the chelating agent is capable of forming two or more coordinate bonds with a single metal atom. Suitable chelating agents include, for example, organic and inorganic chelating agents. Among the suitable inorganic chelating agents are, for example, phosphates such as, for example, tetrasodium pyrophosphate, sodium tripolyphosphate, and hexametaphosphoric acid. Among the suitable organic chelating agents are those with macrocyclic structures and non-macrocyclic structures. Among the suitable macrocyclic organic chelating agents are, for example, porphine compounds, cyclic polyethers (also called crown ethers), and macrocyclic compounds with both nitrogen and oxygen atoms.

Some suitable organic chelating agents that have non-macrocyclic structures are, for example, aminocarboxylic acids, 1,3-diketones, hydroxycarboxylic acids, polyamines, aminoalcohols, aromatic heterocyclic bases, phenol, aminophenols, oximes, Shiff bases, sulfur compounds, and mixtures thereof. In some embodiments, the chelating agent includes one or more aminocarboxylic acids, one or more hydroxycarboxylic acids, one or more oximes, or a mixture thereof. Some suitable aminocarboxylic acids include, for example, ethylenediaminetetraacetic acid (EDTA), hydroxyethylethylenediaminetriacetic acid (HEDTA), nitrilotriacetic acid (NTA), N-dihydroxyethylglycine (2-HxG), ethylenebis(hydroxyphenylglycine) (EHPG), and mixtures thereof. Some suitable hydroxycarboxylic acids include, for example, tartaric acid, citric acid, gluconic acid, 5-sulfoslicylic acid, and mixtures thereof. Some suitable oximes include, for example, dimethylglyoxime, salicylaldoxime, and mixtures thereof. In some embodiments, EDTA is used.

Some additional suitable chelating agents are polymeric. Some suitable polymeric chelating agents include, for example, polyethyleneimines, polymethacryloylacetones, poly(acrylic acid), and poly(methacrylic acid). Poly(acrylic acid) is used in some embodiments.

Some suitable metal-complexing agents that are not chelating agents are, for example, alkaline carbonates, such as, for example, sodium carbonate.

Metal-complexing agents may be present in neutral form or in the form of one or more salts. Mixtures of suitable metal-complexing agents are also suitable. Also contemplated are embodiments of the present invention in which no metal-complexing agent is used.

In some embodiments, compositions used in the present invention contain water; in some of such embodiments, the water contains one or more metal ions, such as, for example, iron ions, copper ions, other metal ions, or mixtures thereof. In some embodiments, the water contains 0.1 ppm or more of one or more metal ions.

Among embodiments that use one or more metal-complexing agents, the amount of metal-complexing agent used in the present invention also may vary widely. In some embodiments, the amount of metal-complexing agent will be adjusted to be sufficient to complex the amount of metal ion that is present or expected to be present in those embodiments. For example, in some embodiments in which the composition of the present invention includes water, if a relatively efficient chelating agent is used (i.e., a chelating agent that will form a complex with all or nearly all the metal ions in the water), the ratio of moles of chelating agent to moles of metal ion will be 0.1 or greater; or 0.2 or greater; or 0.5 or greater; or 0.8 or greater. Among such embodiments that use a relatively efficient chelating agent, the ratio of moles of chelating agent to moles of metal ion will be 2 or less; or 1.5 or less; or 1.1 or less.

Independently, in some embodiments, the amount of metal-complexing agent is, based on the total weight of the composition, 25% by weight or less; or 10% by weight or less; or 1% by weight or less. Independently, in some embodiments, the amount of metal-complexing agent is, based on the total weight of the composition, 0.00001% or more; or 0.0001% or more; or 0.01% or more.

Independently, in some embodiments in which the composition of the present invention includes water, the amount of metal-complexing agent can usefully be determined by the molar concentration of metal-complexing agent in the water. In some embodiments, the concentration of metal-complexing agent is 0.00001 mM (i.e., milli-Molar) or greater; or 0.0001 mM or greater; or 0.001 mM or greater; or 0.01 mM or greater; or 0.1 mM or greater. Independently, in some embodiments in which the composition of the present invention includes water, the concentration of metal-complexing agent is 100 mM or less; or 10 mM or less; or 1 mM or less.

In some embodiments of the present invention, one or more surfactants are used. Suitable surfactants include, for example, anionic surfactants, cationic surfactants, nonionic surfactants, amphoteric surfactants, and mixtures thereof.

One group of suitable anionic surfactants are the sulfosuccinates, including, for example, alkaline salts of mono- and dialkyl sulfosuccinates. In some embodiments, sodium salts of dialkyl sulfosuccinates are used, including, for example, those with alkyl groups with 4 carbons or more, or 6 carbons or more. In some embodiments, sodium salts of dialkyl sulfosuccinates are used, including, for example, those with alkyl groups with 18 carbons or fewer; or 14 carbons or fewer; or 10 carbons or fewer.

Another group of suitable anionic surfactants are the sulfates and sulfonates, including, for example, alkaline salts of alkyl sulfates. In some embodiments, sodium salts of alkyl sulfates are used, including, for example, those with alkyl groups with 4 carbons or more, or 6 carbons or more, or 8 carbons or more. In some embodiments, sodium salts of alkyl sulfates are used, including, for example, those with alkyl groups with 18 carbons or fewer; or 14 carbons or fewer; or 10 carbons or fewer.

Some suitable surfactants are, for example, sodium di-octyl sulfosuccinate, sodium di-hexyl sulfosuccinate, sodium dodecyl sulfate, alkylphenol ethoxylates (such as, for example, Triton^{™} X-100 from Dow), cetyl pyridinium bromide, silicone-based surfactants (such as, for example, Silwet^{™} L-77 surfactant from OSi Specialties), and natural product surfactants such as Quillaja Saponin (available from Desert King Int'1, Chula Vista, CA).

Mixtures of suitable surfactants are also suitable. Suitable surfactants have various properties. For example, some are excellent at enabling cyclopropene to remain in contact with certain plants or plant parts; some are readily soluble in the other ingredients of the formulation; some do not cause phytotoxicity in plants or plant parts. Very few surfactants excel in every property, but the practitioner will readily be able to choose a surfactant or mixture of surfactants with the balance of properties most appropriate for the desired use, taking into account, for example, the species desired to be treated and the other ingredients intended to be used in the composition.

Among embodiments that use surfactant, some embodiments use surfactant in amounts, by weight based on the total weight of the composition, of 0.025% or more; or 0.05% or more; or 0.1 % or more. Independently, among embodiments that use surfactant, some embodiments use surfactant in amounts, by weight based on the total weight of the composition, of 75% or less; or 50% or less; or 20% or less; or 5% or less; or 2% or less; 1% or less; or 0.5% or less; or 0.3% or less.

In some embodiments of the present invention, one or more hydrocarbon or vegetable oils are used. Hydrocarbon oils are straight, branched, or cyclic alkane compounds with 6 or more carbon atoms. In some embodiments, hydrocarbon oils are obtained from petroleum distillation and contain a mixture of alkane compounds, along with, in some cases, impurities. In some embodiments, hydrocarbon oils are used that contain 6 or more carbon atoms. In some embodiments, hydrocarbon oils are used that contain 18 or fewer carbon atoms. Some suitable hydrocarbon oils include, for example, hexane, decane, dodecane, hexadecane, diesel oil, refined paraffinic oil (e.g., ULTRAFINE™ spray oil from Whitmire Micro-Gen Research Labs. Inc., St. Louis, MO), and mixtures thereof. Some suitable vegetable oils are soybean, corn, canola, sunflower in addition to alkylated vegetable oils such as methylated soybean oil (e.g., SOYGOLD 1100 from Ag Environmental Products, LLC, Omaha, NE).

Among embodiments that use oil, some embodiments use oil in amounts, by weight based on the total weight of the composition, of 0.25% or more; or 0.5% or more; or 1% or more. Independently, among embodiments that use oil, some embodiments use oil in amounts, by weight based on the total weight of the composition, of 90% or less; or 50% or less; or 10% or less; or 5% or less; or 4% or less; or 3% or less.

Some embodiments of the present invention involve the use of one or more alcohols. The suitable alcohols include, for example, alkyl alcohols and other alcohols. As used herein, alkyl alcohols are alkyl compounds with one hydroxyl group; the alkyl group may be linear, branched, cyclic, or a combination thereof; the alcohol may be primary, secondary, or tertiary. In the present invention, alkyl alcohols are used which have alkyl groups with 2 or more carbon atoms. In some embodiments, ethanol, isopropanol, or a mixture thereof are used. In some embodiments, alkyl alcohols are used which have alkyl groups with 20 or fewer carbon atoms; or 10 or fewer carbon atoms; or 6 or fewer carbon atoms; or 3 or fewer carbon atoms.

Among embodiments that use alcohols, some embodiments use alcohol in amounts, by weight based on the total weight of the composition, of 0.25% or higher; or 0.5% or higher, or 1% or higher. Among embodiments that use alcohols, some embodiments use alcohol in amounts, by weight based on the total weight of the composition, of 90% or less; or 50% or less; or 10% or less; or 5% or less; or 4% or less; or 3% or less.

One useful method of assessing the usefulness of compositions is the activity of the composition. As used herein, "activity" of a cyclopropene means the concentration of pure cyclopropene that is available to be used. For example, in general, if a reagent is mixed with a composition containing cyclopropene, and that reagent reacts with some or all of the cyclopropene, or that reagent complexes with some or all of the cyclopropene in a way that makes some or all of the cyclopropene undetectable or unavailable for useful purposes, that reagent is said to reduce the activity of the cyclopropene. One method of measuring the activity of a composition of the present invention is by testing the effectiveness of the composition in treating plants, using methods, for example, like the tomato epinasty test defined herein below.

In some embodiments, a composition of the present invention is used to treat plants or plant parts. Plant parts include any part of a plant, including, for example, flowers, blooms, seeds, cuttings, roots, bulbs, fruits, vegetables, leaves, and combinations thereof. In some embodiments, a composition of the present invention is used to treat one or more of blooms, fruits, and vegetables.

Treatment of plants according to the present method may be conducted by any method that allows cyclopropene and pesticides and/or fertilizers to contact the plants or plant parts. Some examples of methods of contact are, for example, spraying, foaming, fogging, pouring, brushing, dipping, similar methods, and combinations thereof. In some embodiments, spraying or dipping or both is used. In some embodiments, the pesticide and/or the cyclopropene are in the form of a gas. Treatment with pesticides, fertilizers and cyclopropenes may be performed in any order, or treatment with two or more of these may be performed simultaneously. The terms "pesticides" and "fertilizers" are not intended to exclude a single pesticide, a single fertilizer or a combination of a single pesticide with one or more fertilizers or of a single fertilizer with one or more pesticides.

### EXAMPLES

**Example 1.** GLYPHOSATE-resistant soybeans were planted in the greenhouse, allowed to grow until they had their second true leaves and then sprayed with 0.5% aqueous GLYPHOSATE (to run off); or with 0.5% GLYPHOSATE combined with 10 ppm (weight active ingredient/weight of spray) 1-MCP delivered as the 1-MCP/α-cylcodextrin complex in water; or with GLYPHOSATE, 1-MCP complex and 0.1% Quillaja Saponin as an adjuvant. After 21 additional days, the height of the plants was measured and compared with untreated control plants. Results are shown in Table 1. The 1-MCP was able to prevent the growth reduction caused by the herbicide.

**Table 1 Effect of 1-MCP on Plant Height for Soybeans Sprayed with 0.5% GLYPHOSATE**

| **Spray Composition** | **Plant Height** |
|---|---|
| Untreated Control | 126 |
| 0.5% GLYPHOSATE | 112.1 |
| 0.5% GLYPHOSATE + 10 ppm 1-MCP | 127 |
| 0.5% GLYPHOSATE + 10 ppm 1-MCP + adjuvant | 124.8 |

**Example 2.** GLYPHOSATE-resistant soybeans were planted in the greenhouse, allowed to grow until they had their second true leaves and then sprayed with 2% glyphosate (to run off); or with 2% GLYPHOSATE combined with 10 ppm (weight active ingredient /weight of spray) 1-MCP delivered as the 1-MCP/α-cylcodextrin complex in water; or with GLYPHOSATE, 1-MCP complex and 0.1% Quillaja Saponin as an adjuvant. After 21 additional days, the height of the plants was measured and compared with untreated control plants. Results are shown in Table 2. For this higher rate of herbicide, the 1-MCP alone improved the height, but 1-MCP plus adjuvant was even better at mediating the effect of the herbicide.

**Table 2 Effect of 1-MCP on Plant Height for Soybeans Sprayed with 2 % ROUNDUP^{™}**

| **Spray Composition** | **Plant Height** |
|---|---|
| Untreated Control | 126 |
| 2 % GLYPHOSATE | 112.9 |
| 2 % GLYPHOSATE + 10 ppm1-MCP | 115.8 |
| 2 % GLYPHOSATE + 10 ppm 1-MCP + adjuvant | 119.2 |

**Example 3.** GLYPHOSATE-resistant soybeans were planted in the greenhouse, allowed to grow until they had their second true leaves and then sprayed with 0.5% CARBARYL^{™} insecticide (to run off) or with 0.5% CARBARYL^{™} combined with 10 ppm (weight active ingredient /weight of spray) 1-MCP delivered as the 1-MCP/α-cylcodextrin complex in water. After 21 additional days, the height of the plants was measured and compared with untreated control plants. Results are shown in Table 3. The 1-MCP was able to mediate some of the setback caused by the insecticide.

**Table 3 Effect of 1-MCP on Plant Height for Soybeans Sprayed with 0.5 % CARBARYL^{™} insecticide**

| **Spray Composition** | **Plant Height** |
|---|---|
| Untreated Control | 126 |
| 0.5% CARBARYL | 112.8 |
| 2 % CARBARYL + 10 ppm 1-MCP | 116 |

**Example 4.** GLYPHOSATE-resistant soybeans were planted in the greenhouse, allowed to grow until they had their second true leaves and then sprayed with 0.05% PHYSAN^{™} 20 fungicide (to run off) or with 0.05% PHYSAN^{™} 20 fungicide/antimicrobial agent combined with 10 ppm (weight active ingredient /weight of spray) 1-MCP delivered as the 1-MCP/α-cylcodextrin complex in water. After 21 additional days, the height of the plants was measured and compared with untreated control plants. Results are shown in Table 4. 1-MCP-treated plants demonstrated a positive effect compared to the fungicide-treated plants.

**Table 4 Effect of 1-MCP on Plant Height for Soybeans Sprayed with 0.05 % PHYSAN^{™} 20 fungicide/antimicrobial agent**

| **Spray Composition** | **Plant Height** |
|---|---|
| Untreated Control | 125 |
| 0.05% PHYSAN 20 | 75 |
| 0.05% PHYSAN 20+ 10 ppm 1-MCP | 82 |

**Example 5.** GLYPHOSATE-resistant soybeans were planted in the greenhouse, allowed to grow until they had their second true leaves and then sprayed with 2% Ammonium Nitrate Liquid Fertilizer (to run off) or with 2% Ammonium Nitrate Liquid Fertilizer combined with 10 ppm (weight active ingredient /weight of spray) 1-MCP delivered as the 1-MCP/α-cylcodextrin complex in water. After 21 additional days, the height of the plants was measured and compared with untreated control plants. Results are shown in Table 5. The fertilizer had a slightly negative effect on plant growth and the 1-MCP was able to alleviate some of that effect.

**Table 5 Effect of 1-MCP on Plant Height for Soybeans Sprayed with 2% Ammonium Nitrate Liquid Fertilizer**

| **Spray Composition** | **Plant Height** |
|---|---|
| Untreated Control | 125 |
| 2% Ammonium Nitrate | 116 |
| 2% Ammonium Nitrate + 10 ppm 1-MCP | 121 |

## Claims

1. A method for reducing detrimental effects of pesticides, fertilizers, or a combination thereof on a plant; said method comprising steps of:
(a) treating the plant with at least one cyclopropene of the formula 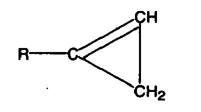 wherein said R is hydrogen or a substituted or unsubstituted alkyl, alkenyl, alkynyl, cycloalkylalkyl, phenyl, or naphthyl group; wherein the substituents, when present, are independently halogen, alkyl, alkoxy, or substituted or unsubstituted phenoxy; and
(b) treating the plant with pesticides, fertilizers or a combination thereof.

2. The method of claim 1, wherein said R is (C₁-C₈)alkyl.

3. The method of claim 2, further comprising one or more molecular encapsulation agents which comprise a cyclodextrin or a mixture of cyclodextrins.

4. The method of claim 3, wherein R is methyl.

5. The method of claim 4, wherein the cyclodextrin is α-cyclodextrin.

6. The method of claim 5, further comprising at least one surfactant.

7. The method of claim 5, further comprising at least one oil.

8. The method of claim 3, wherein the plant is an agronomic crop.

9. The method of claim 8, further comprising at least one surfactant.

10. The method of claim 9, wherein the cyclodextrin is α-cyclodextrin and R is methyl.
